# EUROPEAN PATENT APPLICATION

(11) **EP 2 127 934 A1**
(43) Date of publication of application: **02.12.2009**
(21) Application number: 08835583.9
(22) Date of filing: 29.08.2008
(51) Int. Cl.: B60K 17/04, B60K 17/14, F16D 55/40

(54) **STRUCTURE OF TRANSFER DEVICE OF FORKLIFT**

(30) Priority: 03.10.2007 JP 2007259376
(71) Applicant: Mitsubishi Heavy Industries, Ltd., Tokyo 108-8215 (JP)
(72) Inventor: FUJIMOTO, Akihiko, Sagamihara-shi Kanagawa 229-1193 (JP); OKABE, Kazunari, Sagamihara-shi Kanagawa 229-1193 (JP)
(74) Representative: Henkel, Feiler & Hänzel
(86) International application number: PCT/JP2008/066017
(87) International publication number: WO 2009/044603

(57) **Abstract**

Structure of the transfer device of a forklift in which a mast support portion can be easily formed even in a limited space by improving the arrangement of a power transmission system extending from first and second motors to the front wheel drive section of first and second axles through a reduction gear and a wet braking device in a battery driven forklift. Furthermore, a wet braking device is provided inside the reduction spur gear coaxially thereto, the input gear of an planet reduction gear performing second gear reduction of the first and second motors is provided coaxially to the reduction spur gear while being coupled directly thereto, and the output carrier of the planet reduction gear is coupled with the left front wheel drive section of the first and second axles coaxially to the reduction spur gear.

## Description

### BACKGROUND OF THE INVENTION

### Field of the Invention

This application relates to a structure of a transfer device of a battery driven forklift that is provided with a tension rod that connects a first axle with a second axle, whereby the first axle drives a left front wheel by use of a first motor and the second axle drives a right front wheel by use of a second motor.

### Background of the Invention

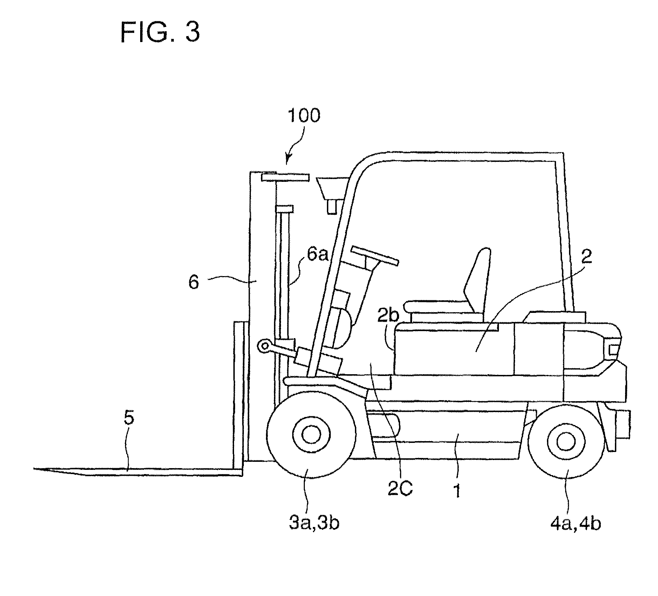

Fig.3 shows an outline side view of a battery driven forklift, whereby the numeral 100 denotes the forklift (the battery driven forklift); the numeral 1 denotes a body of the forklift; the numeral 6 denotes a mast; the numeral 5 denotes a fork that lifts a load and performs up-and-down movements along the mast; the numerals 3a and 3b denote a left front wheel and a right front wheel, respectively; the numerals 4a and 4b denote a left rear wheel and a right rear wheel, respectively; and, the numeral 2 denotes a battery.

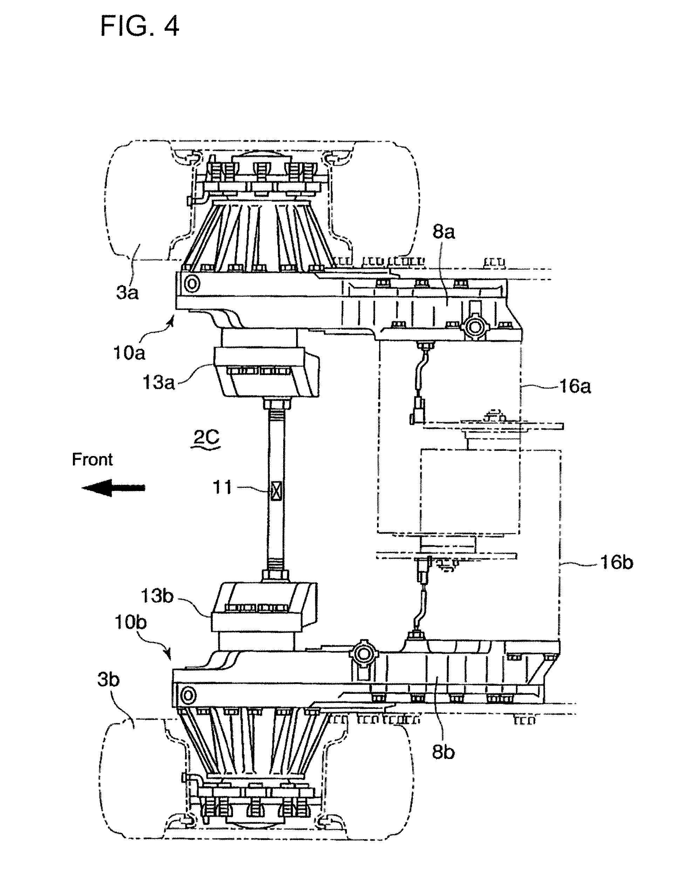

Fig.4 shows a plan view of a transfer device at the front wheel side of the battery driven forklift, whereby the left front wheel 3a is driven by the first motor 16a, via a first axle 10a, while the right front wheel 3b is driven by the second motor, via a second axle 10b.The first axle 10a is formed in a transfer case 8a, while the second axle 10b is formed in a transfer case 8b. An end of a tension rod 11 is fastened to a connection member 13a that is fixed to the first axle 10a, while another end of the tension rod 11 is fastened to a connection member 13b that is fixed to the second axle 10b.

An end of a tension rod 11 is fastened to a connection member 13a that is fixed to the first axle 10a, while another end of the tension rod 11 is fastened to a connection member 13b that is fixed to the second axle 10b.

The patent reference 1 (JP1996-216898) discloses a battery driven forklift in which a manual torque transmission device thereof is provided at the lowermost part of the forklift body and an electric power transmission system (an electric torque transmission device) including the parts such as an actuator and a motor is provided in the rear axles; thus, the space volume beneath the battery can be reduced; as a result, the battery can be located on the underside of the body; a battery of larger capacity (in comparison with conventional capacity) can be mounted; even in a case where a conventional battery is mounted, the height of the body can be reduced. Thus, many advantageous points are shown.

In the battery driven forklift as depicted in Figs. 3 and 4 , the space 2C (see Fig.3) between a front end face 2b of the battery 2 and a rear side face of 6a of the mast is prone to be narrow, because of the size reduction requirements as to the vehicle (forklift) as well as the constraints as to the arrangements of the parts such as a tank for the battery hydraulic oil.

Accordingly, in upsizing the first motor 16a and/or the second motor 16b, the location places of the first and/or second motors get closer to the mast 6 in front of the space 2C; thus, it becomes difficult that a mast support portion (i.e. members or parts) is formed on or over the common center-line for the left and right front wheels.

### SUMMARY OF THE INVENTION/ Disclosure of the Invention

In view of the above-stated conventional technologies and anticipated solutions thereof, the present disclosure aims at providing a transfer device for a battery driven forklift, whereby the mast support (i.e. members or parts) is easily formed regardless of the space limitation, by improving the arrangement of the power transmission system from the first and second motors to the front wheel driving parts (drive sections) of the first and second axles via a reduction gear device and a wet brake device.

In order to achieve the above objective, the present invention discloses a structure of a transfer device of a forklift, the device being provided with a tension rod which connects a first axle that drives a left front wheel by means of a first motor to a second axle that drives a right front wheel by means of a second motor, wherein the device is provided with:
a spur reduction gear device between the first motor and a front wheel driving part of the first axle as well as between the second motor and a front wheel driving part of the second axle, whereby the spur reduction gear device performs the first stage reduction as to the speed of the first motor and the second motor;
a reduction spur gear as an output side of the spur reduction gear device, whereby the center as to the reduction spur gear and the center as to the first or second axle are coaxially aligned;
a wet brake device that is provided at the inner side of the reduction spur gear whereby the center of the wet brake device and the center of the reduction spur gear are coaxially aligned;
a planetary reduction gear that performs the second stage reduction as to the speed of each one of the first and second motor;
an input gear that is formed as a part of an input shaft through which power is inputted into the planetary reduction gear side from the spur reduction gear side, and to which the reduction spur gear is directly coupled, whereby the center of the input gear and the center of the reduction spur gear are coaxially aligned;
an output side carrier (an output carrier) that forms the output shaft of the planetary reduction gear and is connected to a front wheel drive part (section) of each one of the first and second axle, whereby the center of the output carrier and the center of the reduction spur gear are coaxially aligned.

Preferable embodiments are:
(1) the structure of a transfer device of a forklift, thereby a brake hub of a wet brake device is provided so as to be coupled to the inner side of the reduction spur gear; whereby, the brake hub, a brake disc assembly, and the whole set of the driving parts as to the assembly are housed in the inner side of the reduction spur gear; and,
(2) the structure of a transfer device of a forklift, thereby
   the planetary reduction gear of the left or right side, and the front wheel driving part of the first or second axle are arranged in this order, respectively toward the left or right outside of the forklift longitudinal center plane, from the outer left or right side of the reduction spur gear, the outer left or right side corresponding to the output side of the left or right spur reduction gear device; and,
   the brake hub, a brake disc assembly, and the whole set of the drive parts as to the assembly of each left or right side are arranged, on the right or left side of the reduction spur gear toward the inner side for the forklift longitudinal center plane, so that the brake hub, the brake disc assembly, and the whole set of the drive parts as to the assembly are housed inside the reduction spur gear.

According to the above-described present invention and the embodiments thereof, the transfer device is provided with:
a spur reduction gear between the first motor (or the second motor) and the front wheel driving part (the front wheel drive section) i.e. the wheel hub , whereby the spur reduction gear (device) performs the first stage reduction as to the speed of the first motor;
a reduction spur gear as an output side of the spur reduction gear (device) whereby the cross section of the reduction spur gear forms a shape of a large bowl cross section, and the center as to the gear and the center as to the axle are coaxially aligned;
a wet brake device that is provided at the inner side of the reduction spur gear (inside the bowl shape space) whereby the center of the wet brake device and the center of the reduction spur gear are coaxially aligned;
a planetary reduction gear that performs the second stage reduction as to the speed of the motor;
an input gear that is formed as a part of the input shaft through which power is inputted into the planetary reduction gear side, and to which the reduction spur gear is directly coupled, whereby the center of the input gear and the center of the reduction spur gear are coaxially aligned;
an output (side) carrier that forms the output shaft of the planetary reduction gear and is connected to a wheel hub as a front wheel drive part (section) of the axle, whereby the center of the output carrier and the center of the reduction spur gear are coaxially aligned; more in detail,
a brake hub of the wet brake device is provided so as to be coupled to the inner side (inside of the bowl shaped space) of the reduction spur gear, whereby the brake hub, the brake disc assembly, and the whole set of the drive parts as to the assembly are housed in the inner side of the reduction spur gear so as to be covered with the gear.

Accordingly, in the manner that the brake hub, the brake disc assembly, and the whole set of the drive parts as to the assembly are housed in the inner side of the reduction spur gear of a larger pitch circle, the whole configuration parts as to the wet brake device can be placed inside the reduction spur gear so as to covered with the gear. Thus, the space to house the wet brake device slips into the inner side space of the reduction spur gear (into the bowl shaped space inside the gear) just right. As a result, the structure of the transfer device can be of a smaller and more compact size.

Further, in the embodiment as described above, the whole configuration parts of the wet brake device is housed inside the reduction spur gear of a larger pitch circle in the spur reduction gear device that performs the first stage speed reduction, so that the wet brake device is covered with the reduction spur gear; further, the center of the input gear in the planetary reduction gear to perform the second stage speed reduction and the center of the reduction spur gear are coaxially aligned so that the both the centers are on the center line of the axle; and, the center of the output (side) carrier in the planetary reduction gear and the center of the reduction spur gear are coaxially aligned so that the both the centers are on the center line of the axle; moreover, the output (side) carrier is connected to the wheel hub as a front wheel drive part (section) of the axle. Thus, the spur reduction gear device that performs the first stage speed reduction and the planetary reduction gear to perform the second stage speed reduction are coupled without dead space. Therefore, the structure including the spur reduction gear device that performs the first stage speed reduction, the planetary reduction gear to perform the second stage speed reduction, and the wet brake device can be of a compact structure; further, the assembling of these devices can be simplified.

Further, the housing space for the structure including the spur reduction gear device that performs the first stage speed reduction, the planetary reduction gear to perform the second stage speed reduction, and the wet brake device can be reduced to a minimal space, so that the housing space is placed within the before-described space that is formed between the front end face of the battery and the rear side face of the mast. Accordingly, the mast support portion (i.e. members or parts) can be formed on or over the common center-line for the left and right front wheels, even in the case where the size reduction as to the vehicle is required, the constraints as to the arrangements of the parts such as a battery hydraulic oil tank for the battery are introduced, or the upsizing of the motors is required.

### BRIEF DESCRIPTION OF THE DRAWINGS

The present invention will now be described in greater detail with reference to the preferred embodiments of the invention and the accompanying drawings, wherein:
Fig. 1 shows an outline perspective view (an outline bird's eye view) of a transfer device of a battery driven forklift, according to an embodiment of the present invention;
Fig. 2 shows a longitudinal cross section (A-A cross section in Fig.1) of the transfer device;
Fig. 3 shows an outline side view of a battery driven forklift;
Fig. 4 shows a plan view of a transfer device at the front wheel side of the battery driven forklift.

### DETAILED DESCRIPTION OF THE PREFERRED EMBODIMENTS

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

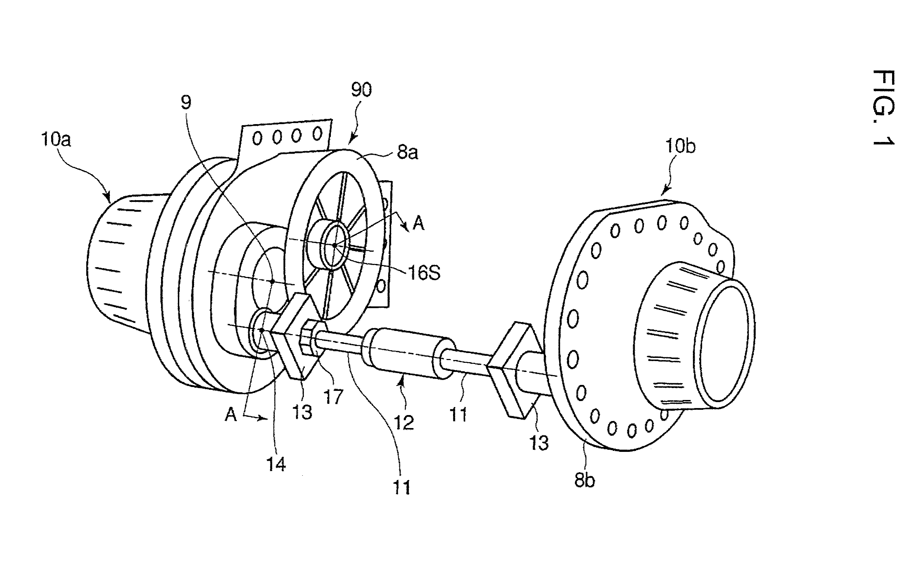

Fig. 1 shows an outline perspective view of a transfer device of a battery driven forklift, in connection with an embodiment of the present invention;

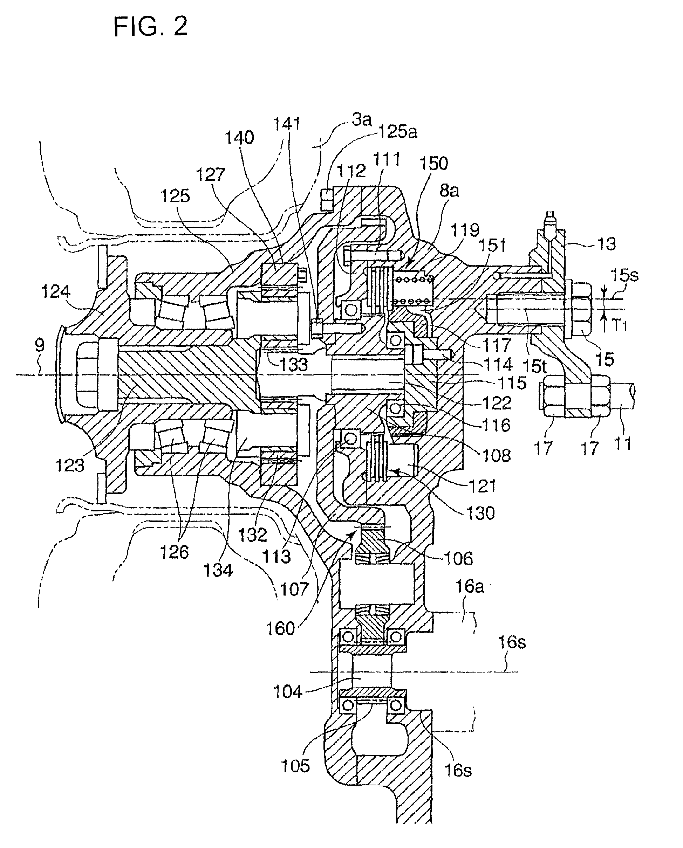

Fig. 2 shows a longitudinal cross section (A-A cross section in Fig.1) of the transfer device.

In Fig. 1, the numeral 90 denotes a transfer device and it is configured as follows.

As is the case in the transfer device in Fig. 4, in the transfer device 90 in Fig. 1, the left front wheel 3a is driven by the first motor 16a, via a first axle 10a, while the right front wheel 3b is driven by the second motor 16b, via a second axle 10b. The first axle 10a and the second axle 10b are formed in a left transfer case 8a and a right transfer case 8b respectively.

Further, an end of a tension rod 11 is fastened to a crank structure 13 that is fixed to the first axle 10a, while another end of the tension rod 11 is fastened to a crank structure 13 that is fixed to the second axle 10b; and, the left and right axles 10a and 10b are connected each other via the tension rod 11. The numeral 12 denotes a turnbuckle for adjusting the length of the tension rod 11.

The numeral 16S (Fig. 1) denotes a center of the motor (hereby, the first motor); the numeral 9 denotes a center of the axle (hereby, the first axle 10a); the numeral 14 denotes a center of the tension rod 11.

In the next place, according to Fig. 2, the power transmission system of the transfer device now will be explained. The following explanation is made in connection to the left side (the first axle 10a side); a similar explanation holds in connection to the right side (the second axle 10b side).

An output shaft 104 of the first motor 16a is fitted into a gear 105, with a self-centering fit 16S (see Fig. 2) between a hole that is provided in a transfer case 8a and an outer periphery (see Fig. 2) of the first motor. The gear 105 is engaged with an intermediate gear 106; the intermediate gear 106 is engaged with a reduction gear 107 (a reduction spur gear 107) of a larger pitch circle the cross section of which forms a shape of a large bowl cross section. Thus, a first stage speed reduction is performed.

Inside of the reduction spur gear 107, a plurality of bolts 141 fastens a brake hub 108 (a braking hub 108) of a wet brake device 150 to the reduction spur gear 107. A pin (not shown) fixes a relative position of the brake hub 108 against the transfer case 8a.

A part of the outer periphery (a larger outer periphery part) of the brake hub 108 is supported by a bearing 113 retained by a brake cover 112 that is connected to the transfer case 8a by a plurality of bolt 111; a part of the outer periphery (a smaller outer periphery part) of the brake hub 108 is supported by a bearing 116 inserted into a retainer 115 that is fitted into the transfer case 8a, with a self-centering fit between the transfer case 8a and the retainer, and fastened to the transfer case 8a by a bolt 114.

The hydraulic piston 117 is fitted into a hydraulic oil chamber 151 so as to perform reciprocating movements in the hydraulic oil chamber; when a hydraulic pressure is supplied into the hydraulic oil chamber 151, the elasticity (resilience) of a spring 119 is counteracted, and the hydraulic oil is released from the chamber 151 so that an exit plate included in a clutch disc assembly 130 is separated from a clutch disc included in the assembly 130; thus, the wet brake 150 comprising the assembly 130 is released. In other words, the wet brake device 150 acts as a negative parking brake.

Moreover, a piston 121 fitted into a hole engraved in the transfer case 8a acts as a service brake, the piston 121 receiving a hydraulic oil pressure.

Further, in Fig. 1, a crank structure 13 fastened to an end of the transfer device 8a, by means of a bolt 15 (see Fig. 2 as to the bolt 15); the tension rod 11 is fastened to a free end of the crank structure, by means of two nuts 17 (see Fig. 2 as to the nut 15). There is an eccentricity T1 between a center 15t of the bolt 15 and a center 15s of the support part for the crank structure 13; and, in this manner, the locking of the bolt 15 is securely performed.

On the other hand, a (power transmission) input shaft 122 is connected to the inner periphery of the brake hub 108, with a spline coupling; on one side of the input shaft 122, a (power transmission) input gear 133 is formed as a part of the input shaft 122, whereby the input gear 133 transfers power to a planetary reduction gear 140 (a planet reduction gear 140). The planetary reduction gear 140 is an ordinary planetary reduction gear in which a carrier outputs power; and the planetary reduction gear 140 comprises a planetary gear 132 (an epicycle gear 132) that is rotation-freely supported by a planet gear pin 134, and a ring gear 127 that meshes with a planetary gear 132.

An output (side) carrier 123 of the planetary reduction gear 140 transfers power to a wheel hub 124 that is connected to the output carrier 123 with a spline coupling; the wheel hub 124 drives the left front wheel 3a.

The wheel hub 124 is rotation-freely supported, via a plurality of bearings 126, by a transfer case 125 that is fastened to the transfer case 8a by means of a plurality of bolts 125a.

According to the above-described embodiments, the structure of a transfer device for a forklift is disclosed. The transfer device is provided with:
a spur reduction gear device 160 between the first motor 16a and a front wheel driving part of the first axle 10a as well as between the second motor 16b and a front wheel driving part of the second axle 10b, whereby the spur reduction gear device 160 performs the first stage reduction as to the speed of the first motor and the second motor;
a reduction spur gear 107 as an output side of the spur reduction gear device 160, whereby the center as to the reduction spur gear and the center as to the first or second axle are coaxially aligned;
a wet brake device 150 that is provided at the inner side of the reduction spur gear whereby the center of the wet brake device 150 and the center of the reduction spur gear 107 are coaxially aligned;
a planetary reduction gear 140 that performs the second stage reduction as to the speed of each one of the first motor 16a and the second motor 16b;
an input gear 133 that is formed as a part of an input shaft 122 through which power is inputted into the planetary reduction gear side from the spur reduction gear side, and to which the reduction spur gear 107 is directly coupled, whereby the center of the input gear 133 and the center of the reduction spur gear 107 are coaxially aligned;
an output side carrier 123 that forms the output shaft of the planetary reduction gear 140 and is connected to the wheel hub 124, namely, a front wheel drive part of each one of the first and second axle, whereby the center of the output carrier 123 and the center of the reduction spur gear 107 are coaxially aligned; more in detail,
a brake hub 108 of the wet brake device 150 is provided so as to be coupled to the inner side (inside of the bowl shaped space) of the reduction spur gear 107, whereby the brake hub 108, the brake disc assembly, and the whole set of the drive parts as to the assembly are housed in the inner side of the reduction spur gear 107 so as to be covered with the gear 107.

Accordingly, in the manner that the brake hub 108, the brake disc assembly, and the whole set of the drive parts as to the assembly are housed so as to be covered in the inner side of the reduction spur gear 107 of a larger pitch circle, the whole configuration parts as to the wet brake device 150 can be placed inside the reduction spur gear 107 so as to covered with the gear 107. Thus, the space to house the wet brake device 150 slips into the inner side space of the reduction spur gear (into the bowl shaped space inside the gear 107) just right. As a result, the structure of the transfer device can be of a smaller and more compact size.

Further, in the embodiment as described above, the whole configuration parts of the wet brake device 150 is housed inside the reduction spur gear 107 of a larger pitch circle in the spur reduction gear device 160 that performs the first stage speed reduction, so that the wet brake device 150 is covered with the reduction spur gear 107; further, the center of the input gear 133 in the planetary reduction gear 140 to perform the second stage speed reduction and the center of the reduction spur gear 107 are coaxially aligned so that the both the centers are on the center line 9 of the axle; and, the center of the output (side) carrier 123 in the planetary reduction gear 140 and the center of the reduction spur gear 107 are coaxially aligned so that the both the centers are on the center line 9 of the axle; moreover, the output (side) carrier 123 is connected to the wheel hub 124 as a front wheel drive part (section) of the axle. Thus, the spur reduction gear device 160 that performs the first stage speed reduction and the planetary reduction gear 140 to perform the second stage speed reduction are coupled without dead space. Therefore, the structure including the spur reduction gear device 160 that performs the first stage speed reduction, the planetary reduction gear 140 to perform the second stage speed reduction, and the wet brake device 150 can be of a compact structure; further, the assembling of these devices can be simplified.

Further, the housing space for the structure including the spur reduction gear device 160 that performs the first stage speed reduction, the planetary reduction gear 140 to perform the second stage speed reduction, and the wet brake device 150 can be reduced to a minimal space, so that the housing space is placed within the before-described space 2C that is formed between the front end face 2b of the battery 2 and the rear side face 6a of the mast (see Fig. 3). Accordingly, the mast support portion (i.e. members or parts) can be formed on or over the common center-line for the left and right front wheels, even in the case where the size reduction as to the vehicle is required, the constraints as to the arrangements of the parts such as a battery hydraulic oil tank for the battery 2 are introduced, or the upsizing of the motorsl6a and 16b is required.

### Industrial Applicability

The present invention can supply a structure of a transfer device of a battery driven forklift, whereby the mast support portion is easily formed regardless of the space limitation, by improving the arrangement of the power transmission system from the first and second motors to the front wheel driving parts (drive section) of the first and second axles via a reduction gear device and a wet brake device.

## Claims

1. A structure of a transfer device of a forklift, the device being provided with a tension rod which connects a first axle that drives a left front wheel by means of a first motor to a second axle that drives a right front wheel by means of a second motor, wherein the device comprises:
a spur reduction gear device between the first motor and a front wheel driving part of the first axle as well as between the second motor and a front wheel driving part of the second axle, whereby the spur reduction gear device performs the first stage reduction as to the speed of the first motor and the second motor;
a reduction spur gear as an output side of the spur reduction gear device, whereby the center as to the reduction spur gear and the center as to the first or second axle are coaxially aligned;
a wet brake device that is provided at the inner side of the reduction spur gear whereby the center of the wet brake device and the center of the reduction spur gear are coaxially aligned;
a planetary reduction gear that performs the second stage reduction as to the speed of each one of the first motor and the second motor;
an input gear that is formed as a part of an input shaft through which power is inputted into the planetary reduction gear side from the spur reduction gear side, and to which the reduction spur gear is directly coupled, whereby the center of the input gear and the center of the reduction spur gear are coaxially aligned;
an output side carrier that forms the output shaft of the planetary reduction gear and is connected to a front wheel drive part of each one of the first axle and the second axle, whereby the center of the output carrier and the center of the reduction spur gear are coaxially aligned.

2. The structure of a transfer device of a forklift according to claim 1, thereby a brake hub of a wet brake device is provided so as to be coupled to the inner side of the reduction spur gear; whereby, the brake hub, a brake disc assembly, and the whole set of the driving parts as to the assembly are housed in the inner side of the reduction spur gear.

3. The structure of a transfer device of a forklift according to claim 1, thereby
the planetary reduction gear of the left or right side, and the front wheel driving part of the first or second axle are arranged in this order, respectively toward the left or right outside of the forklift longitudinal center plane, from the outer left or right side of the reduction spur gear , the outer left or right side corresponding to the output side of the left or right spur reduction gear device; and,
the brake hub, a brake disc assembly, and the whole set of the drive parts as to the assembly of each left or right side are arranged, on the right or left side of the reduction spur gear toward the inner side for the forklift longitudinal center plane, so that the brake hub, the brake disc assembly, and the whole set of the drive parts as to the assembly of each left or right side are housed inside each reduction spur gear.
